(19) Europäisches Patentamt
European Patent Office
Office européen des brevets

(11) **EP 2 421 736 B1**

(12) **EUROPÄISCHE PATENTSCHRIFT**

(45) Veröffentlichungstag und Bekanntmachung des Hinweises auf die Patenterteilung:
**16.07.2014 Patentblatt 2014/29**

(21) Anmeldenummer: **10714232.5**

(22) Anmeldetag: **07.04.2010**

(51) Int Cl.:
***B61L 3/00*** *(2006.01)*

(86) Internationale Anmeldenummer:
**PCT/EP2010/054591**

(87) Internationale Veröffentlichungsnummer:
**WO 2010/121901 (28.10.2010 Gazette 2010/43)**

(54) **VERFAHREN ZUM BETRIEB EINES SCHIENENFAHRZEUGS**

METHOD FOR OPERATING A RAIL VEHICLE

PROCÉDÉ POUR LE FONCTIONNEMENT D'UN VÉHICULE SUR RAILS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.04.2009 DE 102009018616**

(43) Veröffentlichungstag der Anmeldung:
**29.02.2012 Patentblatt 2012/09**

(73) Patentinhaber: **Siemens Aktiengesellschaft 80333 München (DE)**

(72) Erfinder: **HAAF, Stefan 97253 Gaukönigshofen (DE)**

(56) Entgegenhaltungen:
**WO-A1-01/07309      DE-A1- 10 159 957
US-A- 3 891 833      US-A- 5 239 472**

• LINER U ET AL: "Energiesparsame Fahrweise in Nahverkehr" ETR EISENBAHNTECHNISCHE RUNDSCHAU, HESTRA-VERLAG. DARMSTADT, DE, Bd. 51, Nr. 7/8, 1. Juli 2002 (2002-07-01) , Seiten 432,434-438, XP007906699 ISSN: 0013-2845

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Betrieb eines Schienenfahrzeugs, bei dem für einen vorgegebenen Streckenabschnitt wenigstens ein Rollpunkt festgelegt ist, bei dessen Erreichen eine Abschaltung einer Traktion des Schienenfahrzeugs erfolgen und das Schienenfahrzeug über wenigstens einen Teil der Reststrecke zu einem Streckenabschnittsende rollen kann. Ein solches Verfahren ist beispielsweise aus der US 5,239,472 A bekannt.

Ziel eines solchen Verfahrens ist es, beim Betrieb des Schienenfahrzeugs Energie einzusparen. Zu diesem Zweck sind schon länger sog. "Rollpunkte", auch "Coasting-Punkte" genannt, bekannt. Dies sind Punkte auf einem Streckenabschnitt, bei deren Erreichen ein Schienenfahrzeugführer die Traktion abschalten und in Richtung Streckenabschnittsende rollen ("coasten") soll. Bisher wurde für einen vorgegebenen Streckenabschnitt ein einzelner Rollpunkt festgelegt, wobei sich dieser an einer festen Zeitreserve für eine Reststrecke bis zum Streckenabschnittsende orientiert. Ein solcher Rollpunkt kann daher nur für eine bestimmte Zeitreserve auf dem Streckenabschnitt energieoptimal bzw. anwendbar sein. Dies wird als nachteilig empfunden.

Ausgehend hiervon liegt der Erfindung die Aufgabe zugrunde, das bekannte Verfahren zum Betrieb eines Schienenfahrzeugs derart weiterzuentwickeln, dass energiesparender gefahren werden kann.

Diese Aufgabe wird bei dem eingangs genannten Verfahren dadurch gelöst, dass für den vorgegebenen Streckenabschnitt mehrere Rollpunkte im Voraus hinterlegt werden, denen jeweils eine feste Entfernung bis zum Streckenabschnittsende und ein fester Fahrzeitraum bis zum Erreichen des Streckenabschnittsendes zugeordnet sind, und bei Durchfahren des vorgegebenen Streckenabschnitts kontinuierlich überprüft wird, ob für einen der Rollpunkte gemäß einer ersten Bedingung eine aktuell erfasste Entfernung bis zum Streckenabschnittsende kleiner als die feste Entfernung bis zum Streckenabschnittsende und gemäß einer zweiten Bedingung ein aktueller Fahrzeitraum bis zum Streckenabschnittsende größer oder gleich dem festen Fahrzeitraum bis zum Streckenabschnittsende ist, und bei Erfüllung beider Bedingungen ein mögliches Abschalten der Traktion des Schienenfahrzeugs signalisiert wird, während bei deren Nichterfüllung ein weiterer der hinterlegten Rollpunkte auf die Erfüllung der beiden Bedingungen überprüft wird.

Damit ist es möglich, abhängig von der aktuellen Position und Zeit, bis zum Ziel adaptiv einen optimalen Rollpunkt zu erkennen und dies dem Fahrzeugführer mitzuteilen.

Aufgrund der Tatsache, dass für den vorgegebenen Streckenabschnitt, der beispielsweise zwischen zwei Haltestellen eines Schienenfahrzeugs definiert sein kann, mehrere Rollpunkte, beispielsweise zwischen zehn und zwanzig, definiert sind, wird die Wahrscheinlichkeit, dass einer dieser Rollpunkte einsetzbar ist, um Energie zu sparen, gegenüber dem Stand der Technik deutlich erhöht. Denn die Rollpunkte unterscheiden sich in ihren Wertepaaren, die aus der festen Entfernung und dem festen Fahrzeitraum bis zum Erreichen des Streckenabschnittsendes bestehen.

Bevorzugt wird für einen Rollpunkt zunächst die Erfüllung der ersten Bedingung und dann die Erfüllung der zweiten Bedingung geprüft.

Vorteilhafterweise wird das mögliche Abschalten der Traktion des Schienenfahrzeugs dem Schienenfahrzeugführer signalisiert. Dies kann auf akustischem und / oder optischem Wege erfolgen. In diesem Fall reagiert der Schienenfahrzeugführer auf das Signal dadurch, dass er beispielsweise den Fahrhebel des Schienenfahrzeugs in Neutralstellung bringt, so dass die Traktion abgeschaltet ist.

Alternativ kann bei Erfüllung der ersten und der zweiten Bedingung für einen Rollpunkt die Traktion des Schienenfahrzeugs auch automatisch abgeschaltet werden. In diesem Fall ist es jedoch sinnvoll, die automatische Abschaltung dem Schienenfahrzeugführer, der letztlich für die Sicherheit des Schienenfahrzeugs verantwortlich ist, zu signalisieren.

Zur Durchführung des Verfahrens ist es erforderlich, dass eine aktuelle Entfernung und ein aktueller Fahrzeitraum des Schienenfahrzeugs zu einem Streckenabschnittsende bzw. zur nächsten Haltestelle, bestimmt werden. Um diese aktuellen Daten zu gewinnen ist es vorteilhaft, wenn in deren Berechnung gemessene Größen eingehen, die aus der Gruppe ausgewählt sind, die Informationen zur Position des Streckenabschnittsendes und/oder zur Länge des Streckenabschnitts aus einem hinterlegten Fahrplan, eine Zielzeit zum Erreichen des Streckenabschnittsendes aus einem hinterlegtem Fahrplan, eine Erkennung des vorgegebenen Streckenabschnitts, Informationen zur aktuellen Position des Schienenfahrzeugs, eine Wegerfassung einer gefahrenen Strecke und eine aktuelle Fahrzeuggeschwindigkeit umfasst. Teilweise können diese Größen redundant sein, wenn beispielsweise die aktuelle Position des Schienenfahrzeugs sowohl über das globale Positioniersystem (GPS) als auch über die Wegerfassung einer gefahrenen Strecke ermittelt wird. Alternativ kann die Zielzeit zum Erreichen des Streckenabschnittendes und weitere Streckeninformationen auch über Funk von der Leitwarte übertragen werden.

Die Rollpunkte können im Voraus auf einer Basis berechnet werden, in die eine Bremskennlinie des Schienenfahrzeugs eingeht. Dabei kann die Bremskennlinie insbesondere eine solche für regenerative Bremsung sein, was zusätzliches Energiesparpotential in sich trägt.

Für einen vorgegebenen Streckenabschnitt können mehrere Bremseinsatzpunkte im Voraus hinterlegt werden, denen jeweils eine feste Entfernung bis zum Streckenabschnittsende und eine feste Fahrzeuggeschwindigkeit zugeordnet sind und bei Durchfahren des vorgegebenen Streckenabschnitts kontinuierlich überprüft wird, ob für einen der Bremseinsatzpunkte gemäß einer dritter Bedingung eine aktuell erfasste Entfernung bis zum Streckenabschnittsende kleiner als die feste Entfernung bis zum Streckenabschnittsende und gemäß einer vierten Bedingung eine aktuelle Fahrzeuggeschwindigkeit größer oder gleich der festen Geschwindigkeit des zugehörigen Bremseinsatzpunktes ist, und bei Erfüllung sowohl der dritten als auch der vierten Bedingung eine Anforderung zum Einleiten eines Bremsvorgangs für das Schienenfahrzeug signalisiert wird. Optional kann in die Berechnung der Bremseinsatzpunkte auch die erwartete Reaktionszeit des Fahrers eingehen.

Dies gewährleistet, dass sicher erkannt wird, wann eine Bremsung des Schienenfahrzeugs eingeleitet werden muss, um mit einer vorgegebenen Bremskennlinie den Zielbahnhof bzw. das Streckenabschnittsende zu erreichen.

Die Anforderung zum Einleiten eines Bremsvorgangs kann einem Schienenfahrzeugführer signalisiert werden, so dass dieser den Vorgang auslöst. Alternativ ist es auch möglich, dass bei Erfüllung sowohl der dritten als auch der vierten Bedingung ein Bremsvorgang für das Schienenfahrzeug automatisch eingeleitet wird. In einem solchen Fall ist wiederum eine Signalisierung des automatischen Einleitens des Bremsvorgangs an den Schienenfahrzeugführer sinnvoll.

Selbstverständlich geht eine ggf. im Voraus ausgewählte und auch zur Berechnung der Rollpunkte zugrunde gelegte Bremskennlinie des Schienenfahrzeugs in eine Berechnung der Bremseinsatzpunkte ein. Dabei kann insbesondere auch eine Kennlinie für regenerative Bremsung gewählt werden.

Da bei regenerativer Bremsung der Fahrbremshebel zur Durchführung des Bremsvorgangs nachjustiert werden muss, ist es günstig, wenn dem Schienenfahrzeugführer auf einer Anzeigeeinrichtung eine Sollstellung des Fahrbremshebels zur Durchführung des Bremsvorgangs angezeigt wird.

Zur weiteren Einsparung von Energie kann es günstig sein, wenn während des Bremsvorgangs eine anforderbare Bremskraft automatisch, abhängig von einer aktuellen Fahrzeuggeschwindigkeit, so begrenzt wird, dass überwiegend oder sogar auch rein regenerativ gebremst wird. Dabei kann eine Begrenzung nur dann aktiviert werden, wenn der Fahrbremshebel eine vorbestimmte Mindestauslenkung nicht überschreitet, die einem Wert von beispielsweise 50% der Gesamtauslenkung des Fahrbremshebels entsprechen kann.

Das Verfahren insgesamt wird bevorzugt gegen Ende der Fahrt, z.B. im letzten Drittel des Streckenabschnitts, zwischen zwei Haltestellen durchgeführt. Dies führt dazu, dass ein Risiko von Verspätungen minimiert wird.

Bevorzugt wird für einen Rollpunkt noch eine zusätzliche Bedingung geprüft, gemäß der das Schienenfahrzeug eine Mindestgeschwindigkeit aufweist. Diese Mindestgeschwindigkeit muss gewährleisten, dass das Schienenfahrzeug über eine solche Geschwindigkeit verfügt, dass ein als ausreichend erachteter Zeitrückhalt tatsächlich die gewünschte Ausrollbewegung des Schienenfahrzeugs bis zu einem Ende des Streckenabschnitts ermöglicht.

Ausführungsbeispiele der Erfindung werden nachfolgend unter Bezugnahme auf die Zeichnungen noch näher erläutert. Es zeigen:

Figur 1    ein Übersichts-Blockdiagramm zur Veranschaulichung eines Verfahrens zum Betrieb eines Schienenfahrzeugs in energiesparender Weise und

Figur 2    eine grafische Darstellung des Verlaufs einer Fahrgeschwindigkeit eines Schienenfahrzeugs als Funktion des Abstands zu einem Streckenabschnittsbeginn.

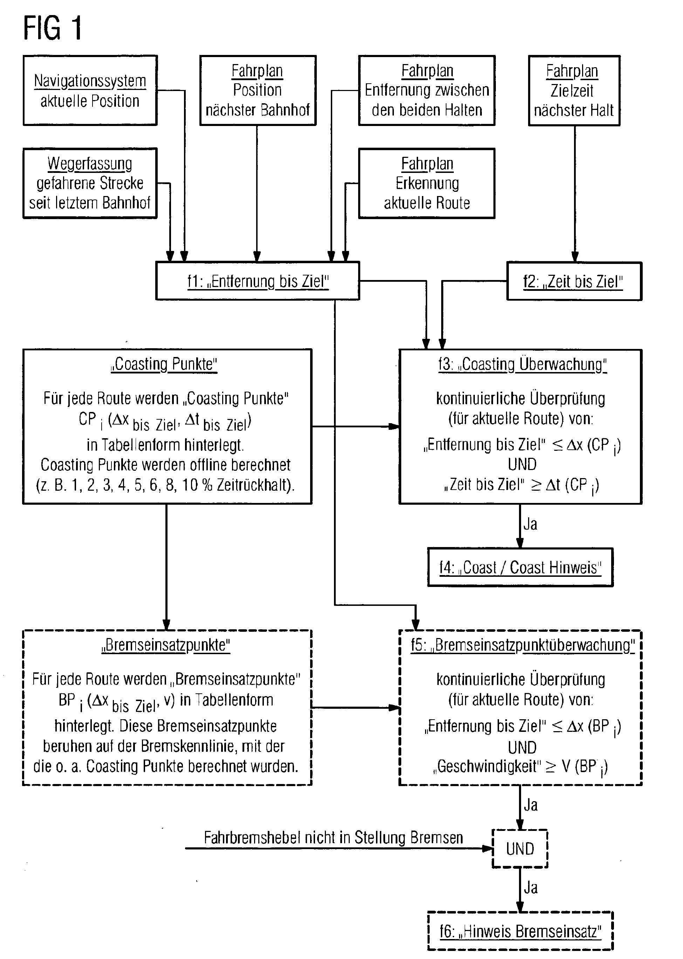

Im oberen Bereich von Figur 1 ist veranschaulicht, in welcher Weise zwei Kerngrößen eines Verfahrens zum Betrieb eines Schienenfahrzeugs in energiesparender Weise gewonnen werden. Eine erste Kerngröße ist dabei eine aktuelle Entfernung zu einem Streckenabschnittsende f1. Diese Entfernung wird unter Zuhilfenahme mehrerer Eingangsdaten aktuell berechnet. Diese Eingangsdaten stammen von einem Navigationssystem, das eine aktuelle Position des Schienenfahrzeugs wiedergibt, einer Wegerfassung, die eine gefahrene Strecke seit einem letzten Bahnhof bzw. seit Streckenabschnittsbeginn wiedergibt, sowie einen Fahrplan, dem Informationen zur Position des nächsten Bahnhofs bzw. des Streckenabschnittsendes, eine Entfernung zwischen dem vorhergehenden und dem kommenden Bahnhof bzw. eine Länge des Streckenabschnitts und Informationen darüber, welche aktuelle Route vorliegt, entnommen werden können. Aus den Daten, die von dem hinterlegten Fahrplan, dem Navigationssystem und der Wegerfassung kommen, lässt sich eine aktuelle Entfernung des Schienenfahrzeugs bis zu dem nächsten Ziel, nämlich dem Streckenabschnittsende, ohne Weiteres Berechnen.

Allgemein ausgedrückt, errechnet die Funktion f1 kontinuierlich aus den oben angegebenen Eingabewerten die aktuelle Entfernung des Schienenfahrzeugs bis zum Zielbahnhof bzw. Streckenabschnittsende. Im einfachsten Fall kann dies durch Subtraktion der Ortskoordinaten von Zielbahnhof und der aktuellen Position erfolgen. Alternativ kann auch ein Vergleich der gefahrenen Strecke mit der Streckengesamtlänge herangezogen werden.

Favorisiert wird jedoch eine Vorgehensweise, bei der die verschiedenen Informationen miteinander verglichen und optimiert werden. Dies kann z.B. durch einen Kalman-Filter realisiert werden. Dies hat den Vorteil, dass die verschiedenen Stärken der unterschiedlichen Informationen ausgenutzt werden können und damit eine höhere Genauigkeit und Zuverlässigkeit des Systems erzielt werden kann. Zudem kann damit bei Ausfall eines Systems, beispielsweise Verlust der Positionsinformation bei GPS, das Verfahren weiter ausgeführt werden.

Alternativ zu den direkten Daten der Wegerfassung (Standardinformation aus der Fahrzeugsteuerung) kann es vorteilhaft sein, direkt die Rohdaten (Achsdrehzahlen, Radargeschwindigkeit, identifizierte Drehzahlen, ...) in o. a. Optimierer einfliessen zu lassen. Neben den eigentlichen Geschwindigkeitssignalen werden dann noch Gültigkeitsinformationen dieser Signale benötigt, sowie die Information über den Zustand des Fahrzeugs (Beschleunigen, Rollen, Bremsen, aktuelle Zugkraft, aktuelle Bremskraft,...). Anhand dieser Informationen kann der Optimierer dann die jeweils besten Informationen zur Ermittlung der Entfernungsinformation nutzen und die Fehler der einzelnen Geschwindigkeitssignale zustandsabhängig separat korrigieren.

Zudem kann diese Funktion noch eine Aussage über die Güte der ermittelten Entfernungsinformation liefern. Abhängig von der Güte der ermittelten Entfernungsinformation kann das System dann eine Coastingempfehlung aussprechen oder unterdrücken.

Die zweite Kerngröße für das Verfahren ist der Fahrzeitraum bis zum Streckenabschnittsende f2. Zu dessen Berechnung wieder wiederum auf den Fahrplan zurückgegriffen, dem eine Zielzeit zum Erreichen des nächsten Bahnhofs bzw. des Streckenabschnittsendes entnommen werden kann. Optional kann die Zielzeit zum Erreichen des nächsten Bahnhofs auch über Funk an das System übergeben / aktualisiert werden. Unter Hinzunahme der aktuellen Zeit kann der Fahrzeitraum bis zum Streckenabschnittsende festgestellt werden.

Die beiden Größen zu f1, f2 werden kontinuierlich über die gesamte Fahrt des Schienenfahrzeugs über den Streckenabschnitt aktuell ermittelt.

In das durchzuführende Verfahren gehen Rollpunkte ein, die offline unter Zugrundelegung einer ggf. auswählbaren Bremskennlinie, die rein regenerativ aber auch linear sein kann, eingeht. Für jeden Streckenabschnitt werden Rollpunkte $CP_i$ in Tabellenform hinterlegt. Dabei ist jedem Rollpunkt $CP_i$ ein Wertepaar $(\Delta x, \Delta t)$ zugeordnet, wobei $\Delta x$ eine für einen jeweiligen Rollpunkt $CP_i$ feste Entfernung bis zum Streckenabschnittsende ist, während $\Delta t$ ein fester Fahrzeitraum ebenfalls bis zum Streckenabschnittsende bedeutet. Optional kann, um die Robustheit des Algorithmus zu erhöhen auch eine Mindestgeschwindigkeit zu obigen Rollpunkt $CP_i$ $(\Delta x, \Delta t, v_{min})$ hinterlegt werden.

Wenn beispielsweise eine Gesamtstrecke fünf Streckenabschnitte aufweist, können für jeden einzelnen Streckenabschnitt beispielsweise zehn bis zwanzig Rollpunkte berechnet werden. Dabei kann die Folge von Rollpunkten Zeit-rückhalten von beispielsweise 1%, 2%, 3%, 4%, 5%,6% ,8%, z entsprechen, wobei jeweils zugehörige feste Entfernungen bis zum Streckenabschnittsende zu berechnen sind, so dass insgesamt das Schienenfahrzeug bis zu diesem Streckenabschnittsende ausschließlich durch Rollen seinen Fahrplan einhalten kann. Dabei ist unter einem Zeitrückhalt ein solcher Zeitraum zu verstehen, der sich aus der Differenz zwischen der schnellstmöglichen Zeit um den Streckenabschnitt zu durchfahren und der zur Verfügung stehenden Zeit um den Streckenabschnitt zu durchfahren ergibt.

In die Berechnung der Rollpunkte für einen bestimmten Streckenabschnitt kann eine Vielzahl von Größen eingehen. Neben der für das Schienenfahrzeug gewählten Bremskraftkennlinie werden topografische Größen genutzt, beispielsweise ein Geschwindigkeitsprofil der Strecke, deren Höhenprofil, das Vorhandensein eines Tunnels, ggf. auch auftretende Kurvenradien. Des Weiteren können berücksichtigt werden: Zugkraftkennlinien, Antriebs-/Bremsleistungen (Wirkungsgrad), Fahrzeugmasse, Fahrwiderstand, Ruckvorgaben, ein zulässiger Nutzstrom, ein zulässiger Rückspeisestrom und anderes mehr.

Beim Durchfahren eines Streckenabschnitts findet eine Rollpunktüberwachung f3 statt. Diese bedeutet eine kontinuierliche Überprüfung für einen aktuellen Streckenabschnitt von:

$$\text{"Entfernung des Streckenabschnittsende"} \leq \Delta x \ (CP_i)$$

UND

$$\text{"Fahrzeitraum des Streckenabschnittsende"} \geq \Delta t \ (CP_i).$$

Werden für die Rollpunkte zusätzlich Mindestgeschwindigkeiten hinterlegt, dann wird obige kontinuierliche Überprüfung um folgende UND Bedingung erweitert:
UND

$$\text{„aktuelle Geschwindigkeit"} \geq v_{min} \ (CP_i)$$

Die Funktion f3 überprüft kontinuierlich für die jeweils aktuelle Route bzw. den aktuellen Streckenabschnitt, ob die beiden o. g. Bedingungen für einen der hinterlegten Rollpunkte erfüllt sind. Sind beide Bedingungen für einen Rollpunkt erfüllt, dann bedeutet dies, dass genügend Zeit vorhanden ist, um die Traktion des Schienenfahrzeugs auszuschalten und das Schienenfahrzeug in Richtung Zielbahnhof bzw. Streckenabschnittsende rollen zu lassen.

Wenn für einen der mehreren Rollpunkte, die im Voraus berechnet worden sind, eine Erfüllung sowohl der ersten als auch der zweiten Bedingung festgestellt wird (und optional der dritten Bedingung Mindestgeschwindigkeit), erfolgt ein Rollhinweis f4 an einen Schienenfahrzeugführer. Dieser kann dann auf einfache Weise, nämlich durch Stellen des Fahrbremshebels in seine Neutralstellung, die Traktion des Schienenfahrzeugs abschalten. Alternativ ist es auch möglich, dass die Traktion automatisch abgeschaltet wird, wobei dann ein entsprechender akustischer und / oder optischer Hinweis an den Schienenfahrzeugführer erfolgt. Wenn eine automatische Abschaltung der Traktion gestattet wird, muss diese jedoch gesondert aktivierbar sein, so dass der Schienenfahrzeugführer das automatische Abschalten der Traktion auch unterbinden kann.

Zusätzlich ist es möglich, dass das Verfahren einen Speichereintrag vornimmt, wenn der Fahrer den Rollhinweis nicht innerhalb einer spezifizierten Zeit umsetzt.

Es ist möglich, dass im Durchfahren des Streckenabschnitts mehrfach ein Rollhinweis erfolgt. Günstig ist es, wenn die Energieeinsparung durch Rollen des Schienenfahrzeugs eher am Ende eines Streckenabschnitts stattfindet. Sollte die Energieeinsparung eher zu Beginn stattfinden, besteht die Gefahr, dass unvorhergesehene Verzögerungen in einem späteren Teil des Streckenabschnitts eine Nichteinhaltung des Fahrplans nach sich ziehen.

Nachdem das Schienenfahrzeug aufgrund eines Rollhinweises mit abgeschalteter Traktion fährt, dauert dieser Zustand an, bis ein Bremseinsatzpunkt für eine Zielbahnhofsbremsung gekommen ist.

Bei dem Verfahren werden zusätzlich offline-berechnete Bremseinsatzpunkte $BP_i$ in Tabellenform hinterlegt, und zwar wiederum für jeden Streckenabschnitt, den das Schienenfahrzeug zurücklegt. Diese Bremseinsatzpunkte beruhen auf der Bremskennlinie, mit der die oben abgesprochenen Rollpunkte berechnet wurden. Jedem Bremseinsatzpunkt $BP_i$ ist ein Wertepaar ($\Delta x$ bis Streckenabschnittsende, v) zugeordnet, wobei v eine aktuelle Fahrgeschwindigkeit des Schienenfahrzeugs bedeutet.

Es findet eine Bremseinsatzpunktüberwachung f5 statt, die folgendermaßen abläuft: kontinuierlich erfolgt eine Überprüfung für einen aktuellen Streckenabschnitt von:

$$\texttt{"Entfernung bis Streckenabschnittsende"} \leq \Delta x \ (BP_i)$$

UND

$$\texttt{"Geschwindigkeit"} > v \ (BP_i).$$

In dieser Weise sind eine dritte und eine vierte Bedingung definiert, die bei gemeinsamer Erfüllung einen Hinweis f6 nach sich ziehen können, dass nunmehr eine Bremsung des Schienenfahrzeugs zu erfolgen hat. Die Ausgabe dieses Hinweises ist daran geknüpft, dass der Fahrbremshebel sich aktuell nicht in der Stellung "Bremsen" befindet.

Die Hinweisfunktion f6 weist den Schienenfahrzeugführer darauf hin, dass er mit der ausgewählten Bremskennlinie, die auch in die Berechnung der Rollpunkte eingegangen ist, eine Bremsung zum Zielbahnhof bzw. Streckenabschnittsende einleiten soll. Der Hinweis an den Schienenfahrzeugführer erfolgt wiederum visuell und/oder akustisch. Ist eine nicht konstante Bremskennlinie ausgewählt, wie sie beispielsweise bei rein regenerativer elektrischer Bremsung vorliegt, dann kann dem Fahrer auf einer Anzeigevorrichtung die Sollstellung des Fahrbremshebels angezeigt werden. Da eine nicht konstante Bremskennlinie immer ein Nachjustieren des Fahrbremshebels durch den Schienenfahrzeugführer erfordert, wobei das Nachjustieren von einer aktuellen Fahrzeuggeschwindigkeit abhängt, kann folgendes vorgesehen sein: bei dieser besonders angewählten Energiesparoption mit rein regenerativer Bremsung wird während der Zielbremsung auf den Bahnhof die angeforderte Bremskraft automatisch abhängig von der aktuellen Fahrzeuggeschwindigkeit derart begrenzt, dass nur rein regenerativ gebremst wird. Dies wird nur dann aktiviert, wenn der Fahrbremshebel eine bestimmt Mindestauslenkung von beispielsweise 50% seiner Gesamtauslenkung nicht überschreitet

Das vorgestellte Verfahren ist dazu geeignet, adaptiv abhängig von einem aktuellen Zeitrückhalt dem Schienenfahrzeugführer Hinweise zum energiesparenden Fahren zu geben. Das Verfahren ist einfach und robust.

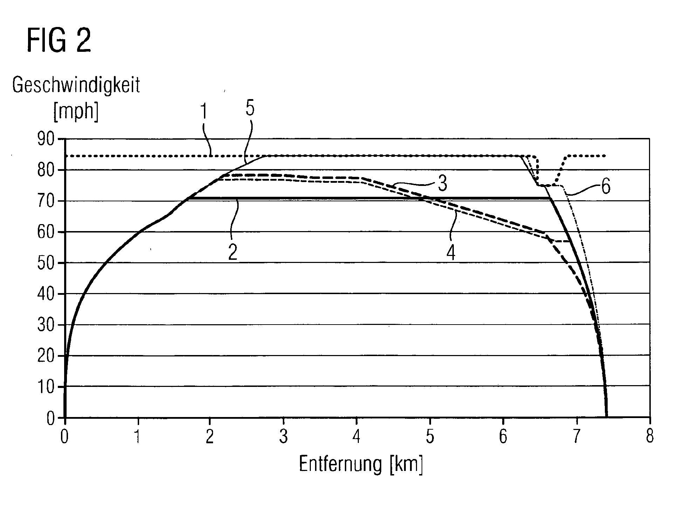

Anhand der Figur 2 wird nun ein Vergleich gezogen zwischen verschiedenen Betriebsmodi zum Durchfahren eines vorgegebenen Streckenabschnitts. In Figur 2 links befindet sich der Streckenabschnittsanfang, beispielsweise ein Abfahrtsbahnhof, während auf der rechten Seite in einer Entfernung von ca. 7,4 km vom Startbahnhof der Zielbahnhof und damit das Streckenabschnittsende liegt.

In Figur 2 bezeichnet eine gestrichelte Linie 1 ein Streckengeschwindigkeitsprofil, eine durchgezogene Linie 2 eine Durchfahrt mit verminderter Streckengeschwindigkeit, eine durchgezogene Linie 3 eine Durchfahrt mit Zeitrückhalt und ausschließlich regenerativem Bremsen, eine durchgezogene Linie 4 eine Durchfahrt mit Zeitrückhalt und linearem Bremsen, eine durchgezogene Linie 5 eine schnelle Durchfahrt und lineares Bremsen und eine durchgezogene Linie 6 ein Referenz-Fahrmuster für schnelle Durchfahrt und Vollbremsung.

In nachstehender Tabelle finden sich die Ergebnisse im Hinblick auf energiesparende Effekte:

| Fahrmuster | Zeit | Fahrplan | Energieeinsparung |
|---|---|---|---|
| Referenz-Fahrmuster | 257.2 | 288.6 | |
| Schnelle Durchfahrt mit linearem Bremsen | 264.7 | 288.6 | 10.1% |
| Durchfahrt mit Zeitrückhalt und linearem Bremsen | 288.6 | 288.6 | 41.9% |
| Durchfahrt mit Zeitrückhalt und ausschließlich regenerativem Bremsen | 288.6 | 288.6 | 49.1% |
| Durchfahrt mit reduzierter Streckengeschwindigkeit | 287.5 | 288.6 | 29.3% |

Die o. a. Einsparungen sind abhängig von vielen Einflussfaktoren (Topologie, Fahrplan, Rückspeisefähigkeit Netz, ...) und zeigen exemplarisch mögliche Energieeinsparungen auf.

**Patentansprüche**

1. Verfahren zum Betrieb eines Schienenfahrzeugs,
   bei dem für einen vorgegebenen Streckenabschnitt wenigstens ein Rollpunkt festgelegt ist, bei dessen Erreichen eine Abschaltung einer Traktion des Schienenfahrzeugs erfolgen und das Schienenfahrzeug über wenigstens einen Teil der Reststrecke zu einem Streckenabschnittsende rollen kann,
   **dadurch gekennzeichnet, dass**
   für den vorgegebenen Streckenabschnitt mehrere Rollpunkte im Voraus hinterlegt werden, denen jeweils eine feste Entfernung bis zum Streckenabschnittsende und ein fester Fahrzeitraum bis zum Erreichen des Streckenabschnittsendes zugeordnet sind, und
   bei Durchfahren des vorgegebenen Streckenabschnitts kontinuierlich überprüft wird, ob für einen der Rollpunkte gemäß einer ersten Bedingung eine aktuell erfasste Entfernung bis zum Streckenabschnittsende kleiner als die feste Entfernung bis zum Streckenabschnittsende und gemäß einer zweiten Bedingung ein aktueller Fahrzeitraum bis zum Streckenabschnittsende größer oder gleich dem festen Fahrzeitraum bis zum Streckenabschnittsende ist, und
   bei Erfüllung beider Bedingungen ein mögliches Abschalten der Traktion des Schienenfahrzeugs signalisiert wird, während bei deren Nichterfüllung ein weiterer der hinterlegten Rollpunkte auf die Erfüllung der beiden Bedingungen überprüft wird.

2. Verfahren nach Anspruch 1,
   **dadurch gekennzeichnet, dass**
   für einen Rollpunkt zuerst die Erfüllung der ersten Bedingung und dann die Erfüllung der zweiten Bedingung geprüft wird.

3. Verfahren nach Anspruch 1 oder 2,
   **dadurch gekennzeichnet, dass**
   das mögliche Abschalten der Traktion des Schienenfahrzeugs einem Schienenfahrzeugführer signalisiert wird.

4. Verfahren nach Anspruch 1 oder 2,
   **dadurch gekennzeichnet, dass**
   bei Erfüllung beider Bedingungen für einen Rollpunkt die Traktion des Schienenfahrzeugs automatisch abgeschaltet wird.

5. Verfahren nach Anspruch 4,
   **dadurch gekennzeichnet, dass**
   die automatische Abschaltung der Traktion einem Schienenfahrzeugführer signalisiert wird.

6. Verfahren nach einem der Ansprüche 1 bis 5,
   **dadurch gekennzeichnet, dass**
   in eine Berechnung der aktuellen Entfernung bis zum Streckenabschnittsende und eines aktuellen Fahrzeitraums bis zum Streckenabschnittsende gemessene Größen eingehen, die aus der Gruppe ausgewählt sind, die Informationen zur Position des Streckenabschnittsendes und/oder zur Länge des Streckenabschnitts aus einem hinterlegten Fahrplan, eine Zielzeit zum Erreichen des Streckenabschnittsendes aus einem hinterlegten Fahrplan, eine Erkennung des vorgegebenen Streckenabschnittes, Informationen zur aktuellen Position des Schienenfahrzeugs, eine Wegerfassung einer gefahrenen Strecke und eine aktuelle Fahrzeuggeschwindigkeit umfasst.

**7.** Verfahren nach einem der Ansprüche 1 bis 6,
**dadurch gekennzeichnet, dass**
die Rollpunkte im Voraus auf einer Basis berechnet werden, in die eine Bremskennlinie des Schienenfahrzeugs eingeht.

**8.** Verfahren nach Anspruch 7,
**dadurch gekennzeichnet, dass**
zum Bremsen eine Kennlinie für regenerative Bremsung gewählt wird.

**9.** Verfahren nach einem der Ansprüche 1 bis 8,
**dadurch gekennzeichnet, dass**
für den vorgegebenen Streckenabschnitt mehrere Bremseinsatzpunkte im Voraus hinterlegt werden, denen jeweils eine feste Entfernung bis zum Streckenabschnittsende und eine feste Fahrzeuggeschwindigkeit zugeordnet sind und bei Durchfahren des vorgegebenen Streckenabschnitts kontinuierlich überprüft wird, ob für einen der Bremseinsatzpunkte gemäß einer dritter Bedingung eine aktuell erfasste Entfernung bis zum Streckenabschnittsende kleiner als die feste Entfernung bis zum Streckenabschnittsende und gemäß einer vierten Bedingung eine aktuelle Fahrzeuggeschwindigkeit größer oder gleich der festen Geschwindigkeit des zugehörigen Bremseinsatzpunktes ist, und
bei Erfüllung sowohl der dritten als auch der vierten Bedingung eine Anforderung zum Einleiten eines Bremsvorgangs für das Schienenfahrzeug signalisiert wird.

**10.** Verfahren nach Anspruch 9,
**dadurch gekennzeichnet, dass**
die Anforderung zum Einleiten eines Bremsvorgangs einem Schienenfahrzeugführer signalisiert wird.

**11.** Verfahren nach Anspruch 9,
**dadurch gekennzeichnet, dass**
bei Erfüllung sowohl der dritten als auch der vierten Bedingung ein Bremsvorgang für das Schienenfahrzeug automatisch eingeleitet wird.

**12.** Verfahren nach Anspruch 11,
**dadurch gekennzeichnet, dass**
das automatische Einleiten eines Bremsvorgangs einem Schienenfahrzeugführer signalisiert wird.

**13.** Verfahren nach einem der Ansprüche 9 bis 12,
**dadurch gekennzeichnet, dass**
die Bremseinsatzpunkte im Voraus auf einer Basis berechnet werden, in die eine Bremskennlinie des Schienenfahrzeugs eingeht, die auch in die Berechnung der Rollpunkte eingeht.

**14.** Verfahren nach Anspruch 13,
**dadurch gekennzeichnet, dass**
zum Bremsen eine Kennlinie für rein regenerative Bremsung gewählt wird.

**15.** Verfahren nach Anspruch 14,
**dadurch gekennzeichnet, dass**
einem Fahrzeugführer auf einer Anzeigeeinrichtung des Schienenfahrzeugs eine Sollstellung eines Fahrbremshebels zur Durchführung des Bremsvorgangs angezeigt wird.

**16.** Verfahren nach Anspruch 15,
**dadurch gekennzeichnet, dass**
während des Bremsvorgangs eine anforderbare Bremskraft automatisch, abhängig von einer aktuellen Fahrzeuggeschwindigkeit, so begrenzt wird, dass rein regenerativ gebremst wird.

**17.** Verfahren nach Anspruch 16,
**dadurch gekennzeichnet, dass**
die Begrenzung nur dann aktiviert wird, wenn der Fahrbremshebel eine vorbestimmte Mindestauslenkung nicht überschreitet.

**18.** Verfahren nach Anspruch 17,
**dadurch gekennzeichnet, dass**
die vorbestimmte Mindestauslenkung einen Wert von 50% der Gesamtauslenkung des Fahrbremshebels entspricht.

**19.** Verfahren nach einem der Ansprüche 1 bis 18,
**dadurch gekennzeichnet, dass**
es am Ende des Streckenabschnitts durchgeführt wird.

**20.** Verfahren nach einem der Ansprüche 1 bis 19,
**dadurch gekennzeichnet, dass**
für einen Rollpunkt zusätzlich die Erfüllung einer Bedingung geprüft wird, gemäß der das Schienenfahrzeug eine Mindestgeschwindigkeit aufweist.

**Claims**

**1.** Method for operating a rail vehicle, in which at least one coasting point is defined for a predefined route section, wherein when said point is reached the traction of the rail vehicle can be deactivated and the rail vehicle can coast over at least part of the remaining route to an end of the route section,
**characterized in that**
for the predefined route section a plurality of coasting points are stored in advance and are each assigned a fixed distance from the end of the route section and a fixed travel time until the end of the route section is reached, and when the predefined route section is traveled through it is continuously checked whether for one of the coasting points a currently detected distance to the end of the route section is shorter than the fixed distance to the end of the route section according to a first condition, and whether a current travel time to the end of the route section is longer than or equal to the fixed travel time to the end of the route section according to a second condition, and when both conditions are fulfilled possible deactivation of the traction of the rail vehicle is signaled, whereas when both conditions are not fulfilled a further coasting point of the stored coasting points is checked for fulfillment of the two conditions.

**2.** Method according to Claim 1,
**characterized in that**
for a coasting point, the fulfillment of the first condition is checked first, and then the fulfillment of the second condition is checked.

**3.** Method according to Claim 1 or 2,
**characterized in that**
the possible deactivation of the traction of the rail vehicle is signaled to a driver of the rail vehicle.

**4.** Method according to Claim 1 or 2,
**characterized in that**
when both conditions for a coasting point are fulfilled, the traction of the rail vehicle is deactivated automatically.

**5.** Method according to Claim 4,
**characterized in that**
the automatic deactivation of the traction is signaled to a driver of the rail vehicle.

**6.** Method according to one of Claims 1 to 5,
**characterized in that**
a calculation of the current distance to the end of the route section and of a current travel time to the end of the route section includes measured variables which are selected from the group which comprises information relating to the position of the end of the route section and/or to the length of the route section from a stored timetable, a destination time relating to the reaching of the end of the route section from a stored timetable, detection of the predefined route section, information relating to the current position of the rail vehicle, detection of the distance of a route traveled along and a current vehicle speed.

7. Method according to one of Claims 1 to 6,
   **characterized in that**
   the coasting points are calculated in advance on a basis which includes a braking characteristic curve of the rail vehicle.

8. Method according to Claim 7,
   **characterized in that**
   a characteristic curve for regenerative braking is selected for the braking.

9. Method according to one of Claims 1 to 8,
   **characterized in that**
   for the predefined route section a plurality of brake application points are stored in advance and are each assigned a fixed distance to the end of the route section and a fixed vehicle speed, and when the predefined route section is traveled through it is continuously checked whether for one of the brake application points a currently detected distance to the end of the route section is shorter than the fixed distance to the end of the route section according to a third condition, and whether a current vehicle speed is higher than or equal to the fixed speed of the associated brake application point according to a fourth condition, and
   when both the third and fourth conditions are fulfilled, a request to initiate a braking process for the rail vehicle is signaled.

10. Method according to Claim 9,
    **characterized in that**
    the request to initiate a braking process is signaled to a driver of the rail vehicle.

11. Method according to Claim 9,
    **characterized in that**
    when both the third and the fourth conditions are fulfilled, a braking process for the rail vehicle is initiated automatically.

12. Method according to Claim 11,
    **characterized in that**
    the automatic initiation of a braking process is signaled to a driver of the rail vehicle.

13. Method according to one of Claims 9 to 12,
    **characterized in that**
    the brake application points are calculated in advance on a basis which includes a braking characteristic curve of the rail vehicle which is also included in the calculation of the coasting points.

14. Method according to Claim 13,
    **characterized in that**
    a characteristic curve for exclusively regenerative braking is selected for the braking.

15. Method according to Claim 14,
    **characterized in that**
    a setpoint position of a brake lever for carrying out the braking process is displayed to a vehicle driver on a display device of the rail vehicle.

16. Method according to Claim 15,
    **characterized in that**
    during the braking process a brake force which can be requested is limited automatically as a function of a current vehicle speed in such a way that exclusively regenerative braking is carried out.

17. Method according to Claim 16,
    **characterized in that**
    the limiting means is activated only when the brake lever does not exceed a predetermined minimum deflection.

**18.** Method according to Claim 17,
**characterized in that**
the predetermined minimum deflection corresponds to a value of 50% of the overall deflection of the brake lever.

**19.** Method according to one of Claims 1 to 18,
**characterized in that**
said method is carried out at the end of the route section.

**20.** Method according to one of Claims 1 to 19,
**characterized in that**
for a coasting point the fulfillment of a condition according to which the rail vehicle has a minimum speed is additionally checked.

**Revendications**

**1.** Procédé pour faire fonctionner un véhicule ferroviaire, dans lequel on fixe, pour un tronçon de ligne donné à l'avance, au moins un point de roulement, pour lequel, lorsqu'il est atteint, un arrêt d'une traction du véhicule ferroviaire a lieu et le véhicule ferroviaire peut rouler, sur au moins une partie du reste de la ligne, vers une extrémité du tronçon de ligne,
**caractérisé en ce que**,
pour le tronçon de ligne donné à l'avance, on mémorise à l'avance, plusieurs points de roulement, auxquels sont affectés respectivement un éloignement fixe jusqu'à l'extrémité du tronçon de ligne et un temps de parcours fixe jusqu'à ce que l'extrémité du tronçon de ligne soit atteinte et
lorsque le tronçon de ligne donné à l'avance est parcouru, on contrôle continuellement si, pour l'un des points de roulement, suivant une première condition, un éloignement détecté présentement jusqu'à l'extrémité du tronçon de ligne est plus petit que l'éloignement fixe jusqu'à l'extrémité du tronçon de ligne, et suivant une deuxième condition, un temps de parcours présent jusqu'à l'extrémité du tronçon de ligne est supérieur ou égal au temps de parcours fixe jusqu'à l'extrémité du tronçon de ligne et si les deux conditions sont satisfaites, on signale un arrêt éventuel de la traction du véhicule ferroviaire, tandis que si elles ne sont satisfaites, on contrôle la satisfaction des deux conditions à un autre des points de roulement mémorisés.

**2.** Procédé suivant la revendication 1,
**caractérisé en ce que**,
pour un point de roulement, on contrôle d'abord que la première condition est satisfaite et ensuite que la deuxième condition est satisfaite.

**3.** Procédé suivant la revendication 1 ou 2,
**caractérisé en ce que**
l'on signale l'arrêt éventuel de la traction du véhicule ferroviaire à un conducteur du véhicule ferroviaire.

**4.** Procédé suivant la revendication 1 ou 2,
**caractérisé en ce que**
si les deux conditions sont satisfaites pour un point de roulement, la traction du véhicule ferroviaire s'arrête automatiquement.

**5.** Procédé suivant la revendication 4,
**caractérisé en ce que**
l'on signale l'arrêt automatique de la traction à un conducteur du véhicule ferroviaire.

**6.** Procédé suivant l'une des revendications 1 à 5,
**caractérisé en ce que**,
dans un calcul de l'éloignement présent jusqu'à l'extrémité du tronçon de ligne et d'un temps de parcours présent jusqu'à l'extrémité du tronçon de ligne, entrent des grandeurs mesurées, qui sont choisies dans le groupe, qui comprend des informations sur la position de l'extrémité du tronçon de ligne et/ou sur la longueur du tronçon de ligne, à partir d'un plan de parcours mémorisé, un temps de destination pour atteindre l'extrémité du tronçon de ligne, à partir d'un plan de parcours mémorisé, une reconnaissance du tronçon de ligne donné à l'avance, des informations sur la position présente du véhicule ferroviaire, une détection de trajet d'un tronçon parcouru et une

**10**

## EP 2 421 736 B1

vitesse présente du véhicule.

**7.** Procédé suivant l'une des revendications 1 à 6,
**caractérisé en ce que**
l'on calcule les points de roulement à l'avance sur une base, dans laquelle entre une caractéristique de freinage du véhicule ferroviaire.

**8.** Procédé suivant la revendication 7,
**caractérisé en ce que**,
pour le freinage, on choisit une courbe caractéristique pour un freinage régénératif.

**9.** Procédé suivant l'une des revendications 1 à 8,
**caractérisé en ce que**,
pour le tronçon de ligne donné à l'avance, on mémorise à l'avance plusieurs points d'intervention du frein, auxquels sont affectés respectivement un éloignement fixe jusqu'à l'extrémité du tronçon de ligne et une vitesse fixe du véhicule et, lorsque le tronçon de ligne donné à l'avance est parcouru, on contrôle continuellement si, pour l'un des points d'intervention du frein, suivant une troisième condition, un éloignement détecté présentement jusqu'à l'extrémité du tronçon de ligne est plus petit que l'éloignement fixe jusqu'à l'extrémité du tronçon de ligne et suivant une quatrième condition, une vitesse présente du véhicule est supérieure ou égale à la vitesse fixe du point d'intervention du frein associé et si, à la fois la troisième et la quatrième condition sont satisfaites, on signale une demande de faire débuter une opération de freinage du véhicule ferroviaire.

**10.** Procédé suivant la revendication 9,
**caractérisé en ce que**
l'on signale la demande de faire débuter une opération de freinage à un conducteur du véhicule ferroviaire.

**11.** Procédé suivant la revendication 9,
**caractérisé en ce que**
si, à la fois la troisième et la quatrième conditions sont satisfaites, on fait débuter automatiquement une opération de freinage du véhicule ferroviaire.

**12.** Procédé suivant la revendication 11,
**caractérisé en ce que**
l'on signale qu'une opération de freinage a débuté automatiquement à un conducteur du véhicule ferroviaire.

**13.** Procédé suivant l'une des revendications 9 à 12,
**caractérisé en ce que**
l'on calcule les points d'intervention du frein à l'avance, sur une base dans laquelle entre une courbe caractéristique de freinage du véhicule ferroviaire, qui entre aussi dans le calcul des points de roulement.

**14.** Procédé suivant la revendication 13,
**caractérisé en ce que**
l'on choisit, pour le freinage, une courbe caractéristique pour un freinage purement régénératif.

**15.** Procédé suivant la revendication 14,
**caractérisé en ce que**
l'on indique à un conducteur du véhicule, sur un dispositif d'affichage du véhicule ferroviaire, une position de consigne d'un levier de frein de marche pour effectuer l'opération de freinage.

**16.** Procédé suivant la revendication 15,
**caractérisé en ce que**,
pendant l'opération de freinage, on limite une force de freinage qui peut être demandée automatiquement, en fonction d'une vitesse présente du véhicule, de manière à effectuer un freinage purement régénératif.

**17.** Procédé suivant la revendication 16,
**caractérisé en ce que**
l'on n'active la limitation que si le levier de frein de marche n'a pas dépassé une excursion minimum déterminée à l'avance.

**18.** Procédé suivant la revendication 17,
**caractérisé en ce que**
l'excursion minimum déterminée à l'avance correspond à une valeur de 50% de l'excursion totale du levier de frein de marche.

**19.** Procédé suivant l'une des revendications 1 à 18,
**caractérisé en ce qu'**
on l'effectue à la fin du tronçon de ligne.

**20.** Procédé suivant l'une des revendications 1 à 19,
**caractérisé en ce que**
l'on contrôle, pour un point de roulement, supplémentairement la satisfaction d'une condition suivant laquelle le véhicule ferroviaire a une vitesse minimum.

# FIG 1

| Navigationssystem aktuelle Position | Fahrplan Position nächster Bahnhof | Fahrplan Entfernung zwischen den beiden Halten | Fahrplan Zielzeit nächster Halt |

Wegerfassung gefahrene Strecke seit letztem Bahnhof

Fahrplan Erkennung aktuelle Route

f1: „Entfernung bis Ziel"

f2: „Zeit bis Ziel"

„Coasting Punkte"

Für jede Route werden „Coasting Punkte" $CP_i$ ($\Delta x_{bis\ Ziel}$, $\Delta t_{bis\ Ziel}$) in Tabellenform hinterlegt. Coasting Punkte werden offline berechnet (z. B. 1, 2, 3, 4, 5, 6, 8, 10 % Zeitrückhalt).

f3: „Coasting Überwachung"

kontinuierliche Überprüfung (für aktuelle Route) von:

„Entfernung bis Ziel" $\leq \Delta x$ ($CP_i$) UND „Zeit bis Ziel" $\geq \Delta t$ ($CP_i$)

Ja

f4: „Coast / Coast Hinweis"

„Bremseinsatzpunkte"

Für jede Route werden „Bremseinsatzpunkte" $BP_i$ ($\Delta x_{bis\ Ziel}$, v) in Tabellenform hinterlegt. Diese Bremseinsatzpunkte beruhen auf der Bremskennlinie, mit der die o. a. Coasting Punkte berechnet wurden.

f5: „Bremseinsatzpunktüberwachung"

kontinuierliche Überprüfung (für aktuelle Route) von:

„Entfernung bis Ziel" $\leq \Delta x$ ($BP_i$) UND „Geschwindigkeit" $\geq V$ ($BP_i$)

Ja

Fahrbremshebel nicht in Stellung Bremsen

UND

Ja

f6: „Hinweis Bremseinsatz"

FIG 2

**EP 2 421 736 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5239472 A